# EUROPEAN PATENT SPECIFICATION

(11) **EP 3 062 610 B1**
(45) Date of publication and mention of the grant of the patent: **25.04.2018**
(21) Application number: 14799045.1
(22) Date of filing: 29.10.2014
(51) Int. Cl.: A01K 5/00, A01F 25/20

(54) **MIXER FEEDER AND METHOD FOR LOADING SUCH A MIXER FEEDER**
FUTTERMISCHER UND VERFAHREN ZUM BELADEN EINES FUTTERMISCHERS
DISTRIBUTEUR-MÉLANGEUR ET PROCÉDÉ DE CHARGEMENT D'UN TEL DISTRIBUTEUR-MÉLANGEUR

(30) Priority: 30.10.2013 NL 2011709
(43) Date of publication of application: 07.09.2016
(73) Proprietor: PEETERS LANDBOUWMACHINES B.V., 4879 NE Etten-Leur (NL)
(72) Inventor: PEETERS, Daniel Petrus Marie, 2920 Nieuwmoer-Kalmthout (BE)
(74) Representative: Algemeen Octrooi- en Merkenbureau B.V.
(86) International application number: PCT/NL2014/050750
(87) International publication number: WO 2015/065184

(56) References cited:
- EP-A1- 1 563 725
- DE-A1- 4 035 753
- DE-A1- 19 745 764

## Description

The invention relates to a mixer feeder for providing feed to cattle.

The invention also relates to a method for loading such a mixer feeder. See e.g. EP 1 563 725 A1. Mixer feeders are used for loading, mixing and cutting ingredients for cattle feed while the mixer feeder is being transported to the location where the mixed feed is to be distributed. To that end a tractor vehicle, typically a tractor, can move a drawn vehicle, i.e. the mixer feeder, which is coupled to the tractor vehicle to a storage location for ingredients somewhere on a farmyard of a cattle farm. Having arrived at said location, the mixer feeder is loaded directly from a silo above the mixer feeder or, for example, with a second vehicle provided with a loading device, such as typically a scoop, or with loading means fixed to the mixer feeder.

While the mixing tub is being loaded with feed, one or a number of mixing elements, typically augers, in the mixing tub are already rotatably driven by the drive unit of the tractor vehicle, which is coupled to the mixer feeder via a so-called power takeoff (PTO). Once loading of the mixing tub is complete, the assembly of tractor vehicle and drawn vehicle drives to a location where cattle are kept, typically a livestock accommodation, on the cattle farm. During this movement the mixing elements can continue to operate, which is often the case in practice. Once the feed in the mixing tub is sufficiently mixed and cut, the mixer feeder is moved past the cattle by the tractor vehicle, during which movement the feed is ejected from the mixing tub via an open door in the mixing tub wall by rotating mixing elements and thus presented to the cattle.

EP-A1 0 393 583 discloses a known mixer feeder comprising a loading device which is fixed to the mixer feeder. The loading device is mounted on a telescopic upright on the back of the mixer feeder.

A drawback of the known mixer feeder described above is that its usability is limited and that its construction is relatively complex.

Accordingly it is an object of the present invention to provide a mixer feeder which is more widely usable and which is of simple construction.

This object is achieved with the mixer feeder according to the present invention for providing feed to cattle, comprising:
- a chassis,
- at least two wheels connected to the chassis for rolling support of the mixer feeder on a ground surface,
- a mixing tub for the feed mounted on the chassis, which comprises at least a bottom and an upright wall,
- at least one mixing element provided in the mixing tub for mixing the feed,
- a connecting element for connection to a loading device for loading the mixing tub with feed by means of the loading device in use,
- a guide means provided on the mixer feeder, which is configured to form a guide in height direction for the connecting element,
- moving means connected to the connecting element, which are designed to move the connecting element in height direction along the guide means, between a lower position and a higher position, relative to the mixing tub,
wherein the connecting element is configured to pivot the loading device about an at least substantially horizontal pivot, between a neutral position and a pivoted position, relative to the guide means in said higher position, such that in the pivoted position feed is transferred from the loading device, across the upright wall, into the mixing tub in use, characterized in that the connecting element comprises a base part and an adapter part which is connected to the base part in such a manner as to be pivotable between the neutral position and the pivoted position about an at least substantially horizontal pivot, wherein the adapter part is designed for being connected to the loading device and wherein the base part is connected to the guide means in such a manner as to be movable in height direction along the guide means. An advantage of the mixer feeder according to the invention is that the aforesaid guide means, along which a connecting element is movable, is easy to realise from a constructional point of view, in contrast to the aforesaid telescopic upright of the known mixer feeder. Furthermore, a larger range can be realised therewith, in particular close to the ground surface. As a result of the use of the aforesaid connecting element, the mixer feeder is furthermore widely usable, because it can be connected to a loading device to be freely selected in dependence on the type of cattle feed to be loaded. Because of the pivotability of the connecting element, feed that has been engaged by the loading device can be deposited into the mixing tub in a simple manner.

The present invention relates particularly, albeit not exclusively, to a mixer feeder designed for use as a drawn vehicle. Accordingly, the mixer feeder preferably has coupling means provided on a front side of the chassis for hitching the mixer feeder to a tractor vehicle.

In an alternative embodiment the mixer feeder is embodied as hybrid vehicle. The mixer feeder can be embodied as independently mobile and drivable vehicle, and may to that end comprise a driver's cab and a drive motor, such as a combustion engine, for example, for moving the mixer feeder over a ground surface. The mixer feeder moreover has at least one steered axle. The drive motor may be connected, via a power takeoff, to the at least one mixing element for supplying driving power to the at least one mixing element additionally to the driving power supplied by the electric motor, for rotatably driving the mixing element.

The guide means is preferably provided at a short end, preferably a rear side, of the mixer feeder.

Quite preferably, the at least one mixing element provided in the mixing tub is an auger. In one embodiment, the mixer feeder has one auger. In an alternative embodiment, the mixer feeder has two or more augers, preferably two augers, which are preferably disposed one behind the other in the mixing tub, seen in the longitudinal direction of the mixer feeder.

It is advantageous if the at least substantially horizontal pivot is provided at the location of an upper end of the connecting element.

The connecting element preferably comprises pivot means which are operative between the base part and the adapter part for causing the adapter part to pivot relative to the base part, wherein the pivot means preferably comprise a hydraulic or pneumatic cylinder, preferably a hydraulic cylinder, for pivoting the adapter part relative to the base part. In one embodiment, the pivot means, preferably being the hydraulic or pneumatic cylinder, are connected to the base part with a first end and to the adapter part with a second end.

It is advantageous if the pivot means also form part of the moving means. As a result of this dual function of the pivot means, a very effective use of parts of the vehicle can be realised. The pivot means are in that case configured to move the connecting element along the guide means, therefore, and also to pivot the adapter part relative to the base part.

It is advantageous if the mixer feeder comprises a support element which is movable in height direction along the guide means, wherein the moving means comprise a first moving element which is connected to the support element and which is operatively connected to the chassis for moving the support element in height direction along the guide means, wherein the pivot means, which also form a second moving element, are connected to the support element and to the adapter part of the connecting element and are also designed to move the connecting element in height direction along the guide means. In this embodiment the pivot means are thus operative between the base part and the adapter part, they are not directly connected to the base part, however.

It is advantageous in that regard if the first moving element is designed for moving the connecting element between the lower position and an intermediate position between the lower position and the higher position, and wherein the second moving element is designed for moving the connecting element between the intermediate position and the higher position.

It is furthermore advantageous if the moving means comprise a hydraulic or pneumatic cylinder, preferably a hydraulic cylinder, for moving the connecting element in the height direction along the guide means. It is advantageous if the moving means comprise a transmission for effecting a movement of the connecting element larger than an associated movement of the hydraulic cylinder, or a movement of a piston in a direction away from a cylinder of the hydraulic cylinder.

In one embodiment, the guide means is movable in the longitudinal direction of the mixer feeder relative to the chassis. The guide means is preferably pivotable relative to the chassis. Alternatively, the guide means may be translatable in a horizontal direction relative to the chassis.

It is advantageous in that regard if the guide means is pivotally connected to the chassis about a further horizontal pivot, wherein the mixer feeder comprises further moving means which are operative between the guide means and the chassis for pivoting the guide means about said further horizontal pivot relative to the chassis.

It is also advantageous if the further moving means comprise a further hydraulic or pneumatic cylinder which is operatively connected to the chassis and which is connected to the guide means.

In one embodiment, said further pivot is located closer to an upper end of the guide means than to a lower end thereof, wherein preferably said further moving means are connected to the guide means near a lower end of the guide means.

It is advantageous in that regard if the guide means is pivotable about said further horizontal pivot relative to the chassis, between a neutral position, in which the guide means is at least substantially parallel to the vertical, and a pivoted position at an angle of 5 to 20 degrees, preferably 8 to 15 degrees, relative to the vertical, in which a lower end of the guide means is pivoted in the direction of the mixing tub, at least in the pivoted position.

Alternatively, the further pivot is located near a lower end of the guide means, wherein the further moving means are connected to the guide means closer to an upper end of the guide means than to the lower end of the guide means.

In a simple preferred embodiment, the guide means comprises two parallel, spaced-apart guide beams. The guide means preferably have a C-shaped cross-section, with the open sides of the C-shape facing each other. Running elements, such as running wheels, of the connecting element may be provided in the C-shaped spaces.

It is furthermore advantageous if the guide means comprises a lower, at least substantially straight first part, which first part merges into a higher, at least substantially straight second part via a second part which is curved in a direction away from the side of the guide means where the loading device is positioned in use, which straight second part includes an angle with the first part that ranges between about 90 to 150 degrees, preferably between about 100 to 130 degrees.

Preferably, the mixer feeder also comprises the loading device, the loading device comprising two parallel, spaced apart further guide beams extending in the height direction, a tine board comprising a number of mutually parallel pins each extending away from the mixer feeder, which tine board is fixedly connected to the further guide beams on a bottom side thereof, and a cutting element comprising two first cutting parts which are connected to a respective further guide beam, being movable in height direction along said guide beam and extending away therefrom in parallel relationship, which two first cutting parts are connected at a location spaced from the further guide beams by a second cutting part which extends transversely to the first cutting parts, wherein the cutting element is designed to detach a block of feed from a feed pit by moving along the guide beams in the direction of the tine board, the loading device also comprising a sliding plate, preferably provided between the two further guide beams, which is designed to cause the feed to slide over the sliding plate upon pivoting of the loading device about the at least substantially horizontal pivot in the higher position for causing feed to be transferred across the upright wall into the mixing tub in use.

In one embodiment of the invention, the connecting element, preferably the adapter part thereof, comprises a sliding plate that is designed for enabling a block of feed that has been detached from a feed pit by means of the loading device to slide over the sliding plate in a direction away from the tine board upon pivoting of the loading device in use.

It is furthermore advantageous in that regard if the loading device also comprises side plates at the location of the two further guide beams, each extending parallel to a respective first cutting part and preferably each being connected to an associated first cutting part.

The mixer feeder is furthermore preferably provided with a discharge opening in the upright side wall of the mixing tub on at least one longitudinal side of the mixer feeder, preferably on both longitudinal sides, for discharging feed from the mixing tub for the purpose of supplying feed from the mixing tub to cattle, which discharge opening can be closed by means of a closure element.

It is furthermore advantageous if the mixer feeder is embodied as an independently mobile and drivable vehicle, and for this purpose comprises a drive motor such as a combustion engine and/or a hydromotor and/or an electric motor for moving the mixer feeder over a ground surface, and at least two axles provided with wheels, at least one of which axles is a steered axle, wherein a driver's cabin is provided between the mixing tub and the above-described guide means comprising a curved part, wherein the first part of the guide means extends substantially in front of the driver's cabin and wherein the second part of the guide means extends substantially over the driver's cabin in the direction of the mixing tub. Further is disclosed a loading device for loading a mixing tub of a mixer feeder with feed, preferably a mixer feeder according to the present invention as described above, which loading device is adapted to be removably connected to the mixer feeder, comprising two parallel, spaced-apart further guide beams extending in the height direction, at least when connected to the mixer feeder, a tine board comprising a number of parallel pins each extending at right angles away from the guide beams, which tine board is fixedly connected to the further guide beams on a bottom side thereof, and a cutting element comprising two first cutting parts, which are connected to a respective further guide beam, being movable along said guide beam in height direction and extending away therefrom in parallel relationship, which two first cutting parts are connected, at a location spaced from the further guide beams, by a second cutting part which extends transversely to the first cutting parts, wherein the cutting element is designed to cut a block of feed from a feed pit under the influence of movement thereof along the guide beams in the direction of the tine board, the loading device also comprising a sliding plate, preferably provided between the two further guide beams, which is designed to cause a feed block that has been detached by means of the cutting element to slide over the sliding board, in a direction away from the tine board, upon pivoting of the loading device in use. Using such a loading device, the mixing tub of the mixer feeder can be loaded with feed in a very efficient manner by making use of the sliding plate. Preferably, the loading device also comprises side plates at the location of the two further guide beams, each extending parallel to a first cutting part and preferably each being connected to an associated first cutting part.

The invention moreover relates to a method according to claim 14. This is a method for loading feed into a mixing tub of a mixer feeder according to the invention to which a loading device is connected, comprising the steps of:
a) introducing at least part of the loading device into a feed pit,
b) detaching an amount of feed from the feed pit by means of the loading device,
c) moving the amount of feed away from the feed pit by means of the loading device, wherein the amount of feed is transferred into the mixing tub, across the upright wall of the mixing tub, by pivoting the loading device about the horizontal pivot to the pivoted position relative to the guide means.

When a loading device as described above is used, which may or may not be provided with a sliding plate as mentioned above, preferably a loading device provided with the aforesaid sliding plate, the tine board is preferably introduced into the feed pit as part of step a), and preferably a block of feed is cut out from a free upper surface of the feed pit by means of the cutting element at the location of the feed block to be cut out as part of step b). The method comprises the further steps of
- determining, as part of step b), using sensor means, a dimension of the amount of feed to be detached, which preferably comprises a free upper surface of the feed pit, at least at the location of the amount of feed to be detached, wherein the determining of the dimension, using the above-describe loading device, preferably takes place by moving the cutting element download in the feed pit from a position above the feed pit, wherein a mechanical resistance is measured, for example by measuring a hydraulic pressure in a hydraulic cylinder connected to the cutting element for moving the cutting element, wherein the distance from the cutting element to the tine board at which an increase of the mechanical resistance is registered corresponds to the dimension, and thus concerns a dimension in height direction,
- determining, as part of step c), the weight of the amount of feed loaded into the mixing tub during the aforesaid step c), using weighing means that are operative on the mixing tub,
- determining a relation between dimension and weight of feed from the feed pit on the basis of the weight and the dimension as determined,
- determining a dimension of an amount of feed to be detached during a next step b) in dependence on a predetermined desired total weight of feed to be loaded into the mixing tub and the relation as determined, and
- detaching an amount of feed having the determined dimension from the feed pit during the aforesaid next step b).

Within the scope of the method according to the invention, as defined in claim 14, it is conceivable that other loading operations take place between a loading operation in which the relation between the dimension and the weight is determined and a next loading operation in which an amount of feed having the determined dimension is detached, in which other loading operations an amount of feed having a different dimension, for example a maximum dimension that can be realised with the loading device, is detached.

Preferably, the method comprises, as part of the aforesaid next step b) of detaching an amount of feed having the determined dimension from the feed pit, the following additional step, in which
- the loading device is introduced into the feed pit for the purpose of detaching the further amount of feed under a previously removed amount of feed, at such a predetermined lower position in the feed pit that a distance between the part of the loading device introduced into the feed pit and a free upper surface of the feed pit at the location of the amount of feed to be detached corresponds to the dimension.

Advantages of the method according to the invention correspond to the above-described advantages of the mixer feeder according to the invention.

The present invention will now be explained in more detail by means of the description of a number of preferred embodiments of mixer feeders according to the invention with reference to the following figures, in which:
Figures 1-10 are side views of a preferred embodiment of a mixer feeder according to the invention, showing various operative positions thereof, in combination with a preferred embodiment of a loading device;
Figure 11A is a three-dimensional view of the mixer feeder of figure 1, showing the loading device of figure 1 disconnected from the mixer feeder;
Figure 11B is a three-dimensional view of another preferred embodiment of a loading device;
Figures 12 and 13 are side views of another preferred embodiment of a mixer feeder according to the invention, showing different respective operative positions thereof, in combination with another loading device;
Figures 14 and 15 are side views of yet another preferred embodiment of a mixer feeder according to the invention, showing different respective operative positions thereof, in combination with the loading device shown in figures 1-10;
Figure 16 is a side view of yet another preferred embodiment of a mixer feeder according to the present invention;
Figure 17 shows the mixer feeder of figure 16 in another operative position;
Figure 18A shows the mixer feeder of figure 16 in three-dimensional view;
Figures 18B and 18C show a part of the mixer feeder of figure 18A in side view and in three-dimensional view, respectively; and
Figures 19A-21C correspond to figures 18A-18C, each showing a different respective operative position of the mixer feeder of figure 16.

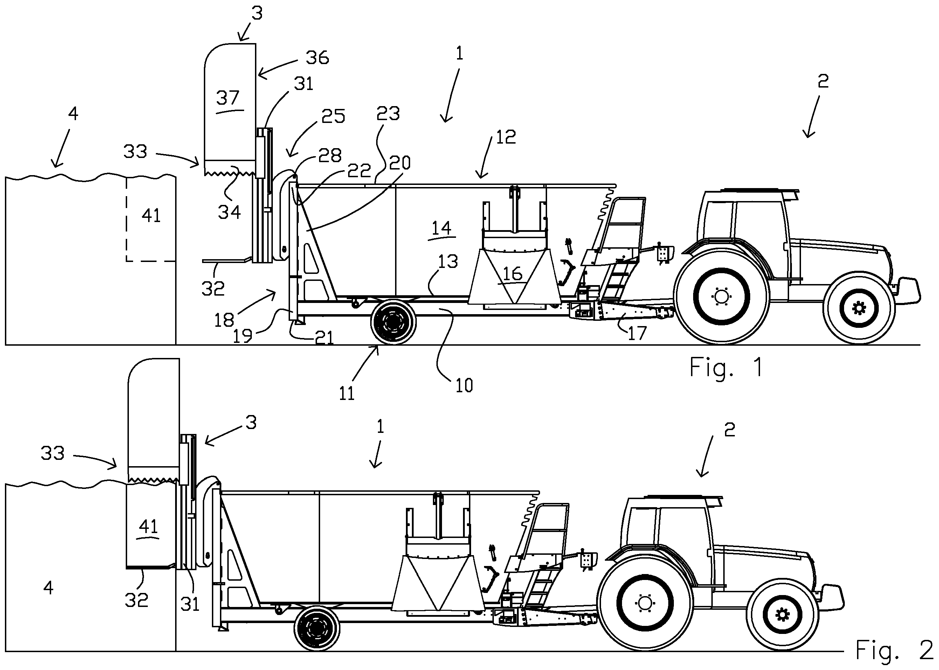

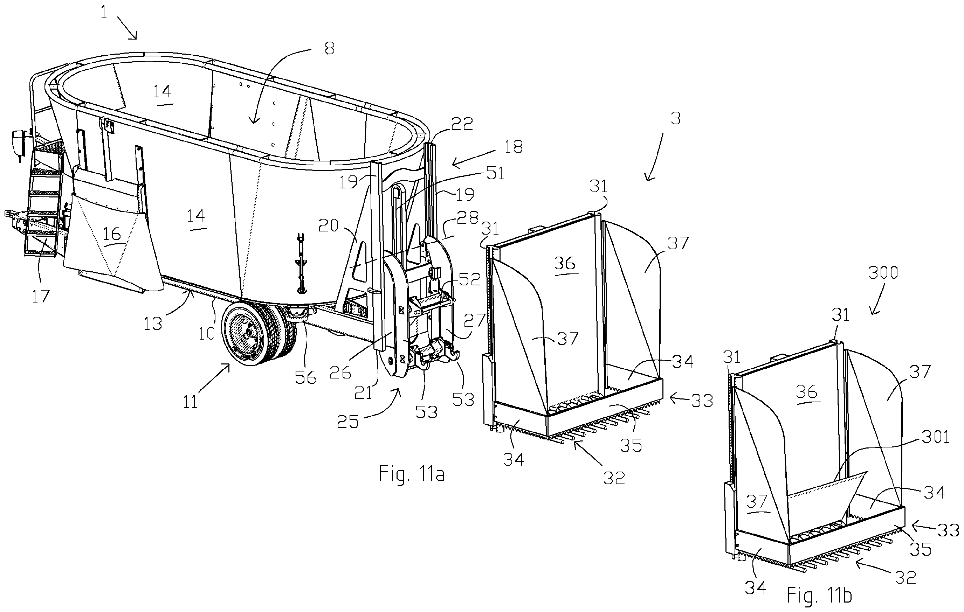

Figures 1-10 show a mixer feeder 1 as a drawn vehicle in combination with a tractor vehicle in the form of a tractor 2. A loading device 3 is connected to the mixer feeder 1, by means of which loading device feed can be loaded into the mixer feeder 1 from a feed pit 4. In figure 11, the mixer feeder 1 and the loading device 3 are shown separately from each other, or in other words, in a disconnected condition.

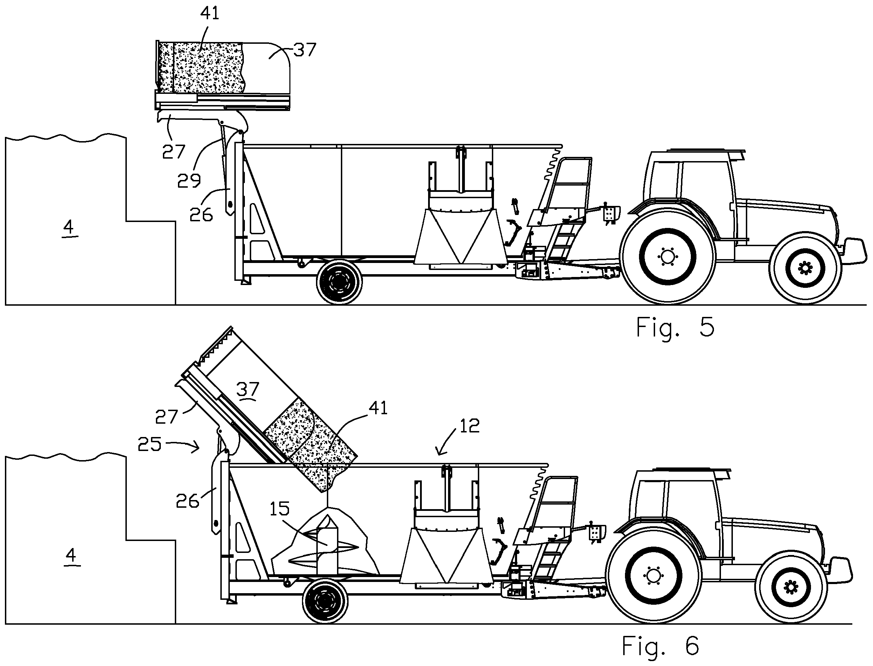

The mixer feeder 1 has a chassis 10 which is provided with one axle provided with wheels 11. Within the scope of the invention, the presence of more than one axle, for example two axles, or a tandem axle, which may or may not be a steering or co-steering axle, is also conceivable and possible. The presence of the axle provided with wheels 11 renders the mixer feeder 1 mobile. The chassis 10 is substantially made up of two parallel chassis beams extending in a longitudinal direction of the mixer feeder 1. The mixer feeder 1 has a mixing tub 12 comprising a bottom 13 and a circumferential upright side wall 14, which define a mixing space 8 that is open at an upper side. The mixer feeder 1 further comprises two driven rotatable mixing elements in the form of augers 15, see figure 6, which are provided in the mixing tub 12 of the mixer feeder 1. A portion of a side wall 14 of the mixing tub 12 is cut away in figure 6 so as to expose at least one of the augers 15 in figure 6 to view. The augers 15 are arranged with their rotation axis extending vertically in the mixing tub 12. Within the scope of the invention, mixing elements can also be provided differently, for example horizontally, in the mixing tub 12.

Because the mixing tub 12 is open on the upper side, it can be loaded, or in other words, filled by depositing feed or feed ingredients to be mixed into the tub from above. The contents of the mixer feeder are transported upward by driving the augers 15, whilst the suction action of the augers 15 effects a downward movement of said contents beside the augers again. As a result, the feed or the ingredients is/are mixed. The mixing operation can be continued until it is determined, for example by visual inspection, that the desired mixing has taken place. By opening unloading doors 16 provided in the wall 14 of the mixing tub 12 on either side and activating the augers 15, feed can be presented to cattle in a stable.

The chassis 10 extends under the mixing tub 12, with the mixing tub 12 being supported on the chassis 10. On a short end front side of the mixer feeder 1, there is provided a drawbar 17 with a traction coupling for coupling the mixer feeder 1 behind the tractor 2.

At a short end rear side of the mixer feeder 1 there is provided a guide means 18 made up of two mutually parallel, vertically extending guide beams 19. The guide beams 19 are fixed to the chassis 10 via a triangular reinforcing element 20. The guide beams 19 extend from a lower end approximately at the level of the chassis 10, or in other words, slightly below the bottom 13 of the mixing tub 12, to an upper end 22 approximately at the level of an upper boundary edge 23 of the wall 14 of the mixing tub 12.

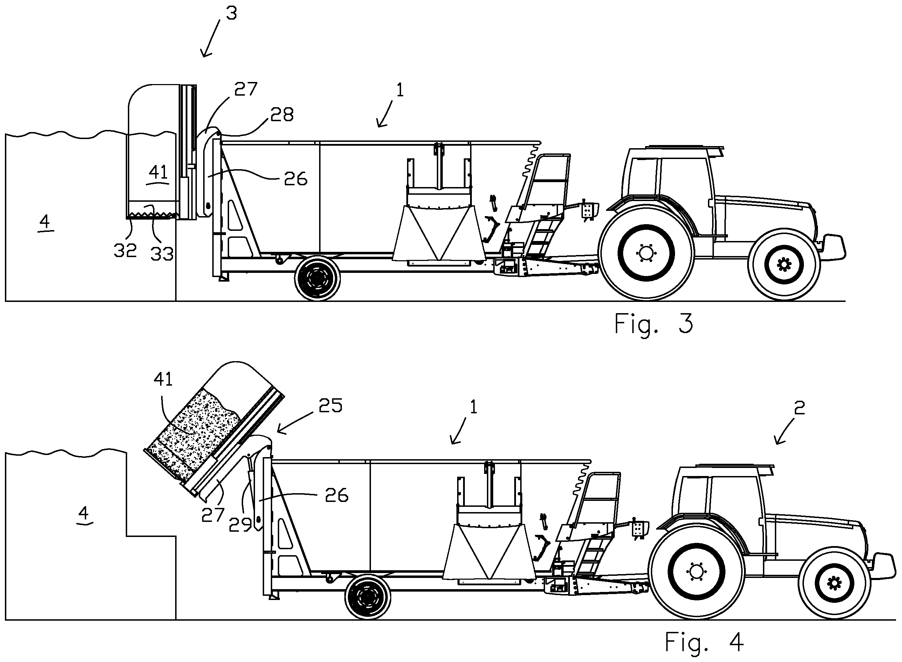

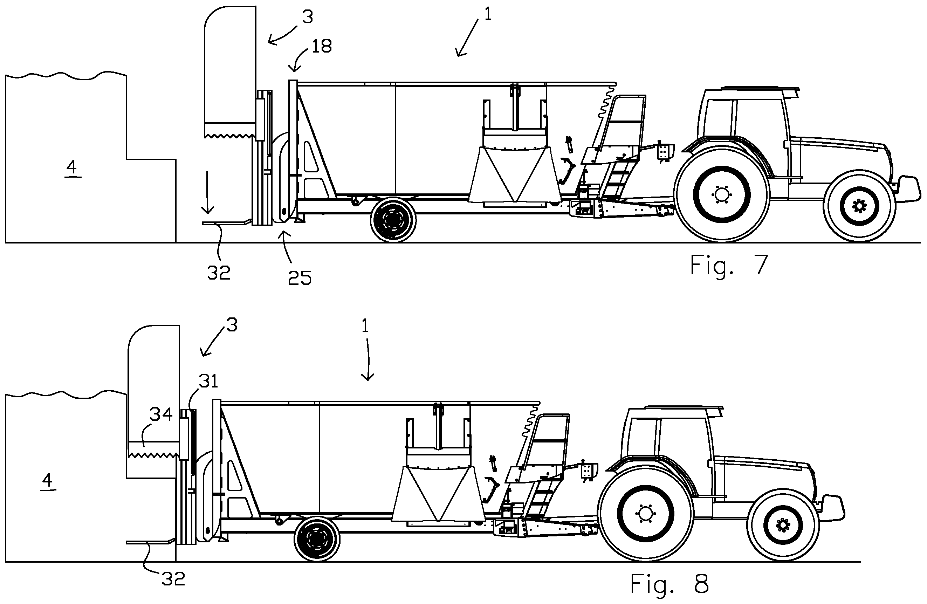

The mixer feeder 1 further comprises a connecting element 25, which is connected to the guide beams 19, being movable in height direction, or in other words, in the longitudinal direction of the guide beams 19, between a higher position and a lower position. The guide beams 19 are to that end C-shaped in cross-section, with the open sides facing each other. See figure 11. In figures 1-3 the connecting element 25 is shown near the higher position; in figures 4-6 and figure 10, it is shown in the higher position; and in figures 7-9 and figure 11 it takes up a lower position. In a lowermost position of the connecting element 25, the loading device 3 connected to the connecting element 25, more specifically the tine board thereof, is located just above the ground surface, as will be described in more detail below. The mixer feeder 1 has a hydraulic cylinder 51 which is operative between the chassis 10 and the connecting element 25 for changing the position in height direction of the connecting element 25 relative to the chassis 10. Within the scope of the invention, more than one hydraulic cylinder, for example two cylinders, may be provided for changing the position of the connecting element along the guide means.

The connecting element 25 has a base part 26 which is connected to the chassis beams 19, which base part is provided with running wheels that roll in the C-shaped spaces of the chassis beams 19, and an adapter part 27 which is pivotally connected to the base part 26 about a horizontal pivot 28 that extends in the transverse direction of the mixer feeder, or in other words, in the plane defined by the guide beams 19. The pivot 28 is provided at the location of an upper end of the connecting element 25. It is defined by a central axis of hinges by means of which the adapter part 27 is pivotally connected to the base part 26. The adapter part 27 is designed for being detachably connected to the loading device 3 and is to that end provided with a connecting bracket 52 and two hook means 53. Within the scope of the invention it is also possible to use an alternative connecting construction. In this regard a screwed connection or a fixed connection may also be considered. The aforesaid pivoting about the horizontal pivot 28 is effected by a hydraulic cylinder 29 (see figure 4). In one embodiment, more than one hydraulic cylinder, preferably two cylinders, may be provided for effecting said pivoting. The adapter part 27 can be pivoted from a non-pivoted or in other words, neutral position, in which the adapter part is parallel to the base part 26 and is vertically oriented, and a pivoted position, in which the adapter part 27 includes an angle of about 135 degrees with the base part 26, as shown in figure 6.

The loading device 3 comprises two parallel, spaced-apart further guide beams 31 which extend in the height direction. The guide beams 31 are interconnected by cross elements, being further connected to connecting elements for being detachably connected to the adapter part 27, more specifically via the aforesaid bracket 52 and hook means 53. The loading device 3 further comprises a tine board 32 comprising a number of mutually parallel tines, each extending at right angles in rearward direction away from the guide beams 31, which tine board is fixedly connected to the further guide beams 31 at a lower end of said guide beams. The loading device 3 further comprises a cutting element 33, which comprises two first serrated cutting parts 34, with cutting elements that face the tine board at a bottom side thereof, which cutting parts 34 are connected to a respective further guide beam 31, being movable in the height direction along said further guide beam, extending in rearward direction, away from said guide beam, in mutual parallel relationship. The two first cutting parts 34 have approximately the same length as the tines of the tine board 32, as shown in the figures, and are interconnected at their free ends by a second cutting part 35 that extends transversely to the first cutting part 34, which second cutting part 35 is likewise provided with cutting elements on a bottom side thereof. As shown in the figures, the area bounded by the cutting element 33 at least substantially corresponds to the area covered by the tine board 32, at least when seen in top plan view. The cutting element 33 can be moved along the guide beams 31, between a higher position and a lower position in the immediate vicinity of the tine board 32, by means of hydraulic cylinders. The loading device 3 also comprises a sliding plate 36 provided between the two further guide beams 31, which fills the space between the guide beams 31 as shown in figure 11. The sliding plate 36 is provided for pivoting the loading device 3 about the horizontal pivot 28 in the higher position of the connecting element 25 in use for the purpose of causing feed to slide over the sliding plate 36 so as to transfer or said feed across the upright wall 14 and deposit it into the mixing tub 12. In order to largely prevent feed from falling sideways from the loading device 3 upon being deposited into the mixing tub 14, side plates 37 are provided, which side plates extend upward from the respective cutting parts 34 and join the sliding plate 36.

Using the mixer feeder 1 in combination with the loading device 3, feed according to the invention can be loaded into the mixing tub 12 in the following manner.

First of all, the cutting element 33 is positioned some distance from the tine board 32, as shown in figure 1. Then the mixer feeder is driven rearward by means of the tractor 2, as a result of which the tine board 32 is inserted into a feed pit 4, under a free upper surface thereof. See figure 2. Following that, the cutting element 3 is moved downward along the guide beams 31 to a position directly above the tine board 32, as a result of which a block 41 of feed is cut from the feed pit. See figure 3. Subsequently, the mixer feeder 1 is driven forward a little and the connecting element 25 is moved to its higher position insofar as it does not already take up said higher position yet. At the same time, the adapter part 27 is pivoted about the horizontal pivot 28 relative to the base part 26. See figures 4 and 5. When the adapter part 27 is pivoted through more than 90 degrees, preferably to about 130 degrees, as shown in figure 6, over the boundary edge 23 of the wall 14 of the mixing tub 12, the block 41 that has been cut out will also slide over the sliding plate 36 into the mixing tub 12. The slide plates 37 prevent feed from falling sideways from the loading device 3 upon movement of the feed block 41 away from the feed pit 4. Within the scope of the invention, the term "feed" may also include grass, for example. Grass is generally compressed in a feed pit and sticks together. This makes it possible to detach grass from the feed pit in the shape of a block. The term "feed" may also include maize. Maize is a granular product but upon storage in a feed pit it is also compressed, making it possible to detach maize from the feed pit in the shape of a block.

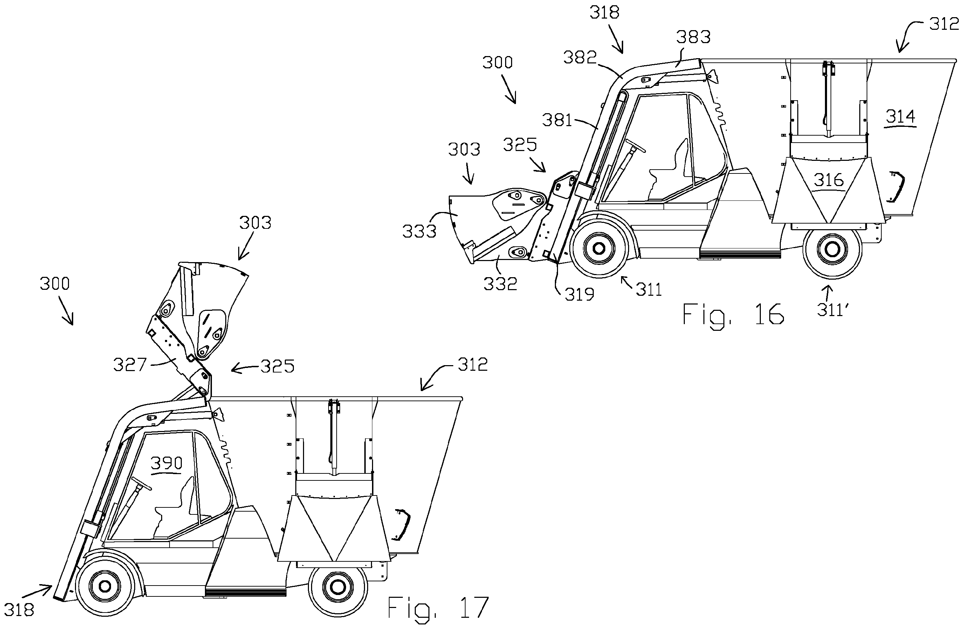

The term "feed" may further include a loose by-product, such as a concentrated feed. To load such a feed type into the mixing tub, use can be made of the loading device 300 shown in figure 16, which shows a great deal of similarity to the above-described loading device 3. Accordingly, like parts are indicated by the same numerals. In comparison with the loading device 3, the loading device 300 is additionally provided with a bottom plate 301. The bottom plate 301 can be manually placed on top of the tine board 32. Alternatively, the bottom plate 301 may be provided on the loading device 3 in such a manner that it can be swung down either manually or mechanically, using a hydraulic cylinder, for example. The bottom plate 301 can swing down from an upright position, in which the bottom plate lies flat against the sliding plate 36, to a swung-down position, in which it extends horizontally, or in other words, at least substantially perpendicularly to the guide beams 31 or the sliding plate 36. In figure 16 the bottom plate 301 is shown in an intermediate position for the sake of clarity. Using the loading device 300 with its bottom plate 301 extending at right angles to the guide beams 31, it is also possible to deposit a loose feed type, i.e. a feed type which cannot be detached and be removed from the feed pit in a block shape, into the mixing tub. The presence of the bottom plate 301 makes it possible to use the loading device 300 as a scoop.

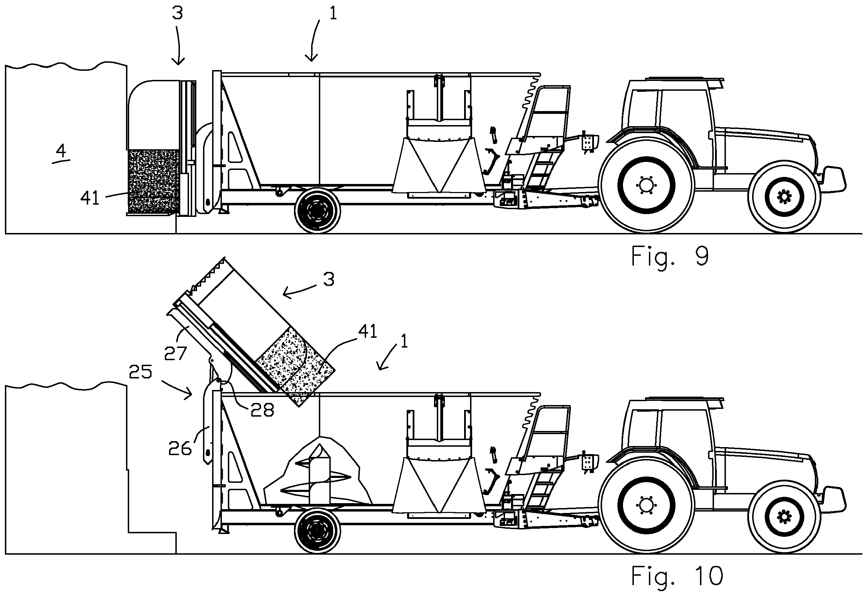

After the feed block 41 has been deposited into the mixing tub 12, the adapter part 27 is pivoted back again to the starting position, after which the connecting element 25 is moved downward along the guide means 18 in preparation of the cutting out of a further block 41' from the feed pit 4, under the free space in the feed pit 4 that has been created by the removal of the block 41. See figure 7. Subsequently, the above-described steps of inserting (figure 8), cutting (figure 9) and moving upward and pivoting for depositing the further block 41' into the mixing tub 12) figure 10) can be repeated.

Subsequently, a yet lower block of feed can be cut out, or a block which is located behind the block 41 that has been removed from the feed pit 4 in the meantime, which block will in that case be positioned up front, therefore, again starting from the upper side of the feed pit.

In a special embodiment of a method according to the invention, the mechanical resistance encountered during the above-described downward movement of the cutting element shown in figure 3, or at least an increase of the resistance being encountered as soon as the cutting element comes into contact with a free upper surface of the feed pit 4 at the location of the block 41 to be detached by means of the cutting element 33, is registered. Furthermore, the position in height direction of the tine board 32 is determined, which is done by determining the position in height direction of the connecting element 25 relative to the guide means 18, on which the position of the tine board 32 depends according to a fixed relation. After the feed block 41 in question has been detached from the feed pit, using the cutting element 33, and said feed block has been deposited into the mixing tub 12, the weight of the feed block 41 deposited into the mixing tub 12 is determined by making use of a sensor arrangement 56 comprising weighing sensors at the location of support points of the mixing tub 12 on the chassis 10. Because the position in height direction of the cutting element 33 relative to the guide beams 31 is registered as described above, the height of the feed block 41 removed from the feed pit is known. In combination with the aforesaid determined weight of the feed block 41 after it has been deposited into the mixing tub, it is possible to determine a relation between a dimension, in this example the height, and the weight of the feed from the mixing tub 4. When subsequently another feed block is to be cut out, for example the feed block 41', which feed block is located directly below the free space created by the removal of the feed block 41, the loading device 3 can be inserted into the feed pit 4 with the tine board 32 thereof at a predetermined lower position for detaching the feed block 41', such that the weight of the feed block 41' to be detached will at least substantially correspond to a desired weight of the further feed block 41' as determined in dependence of the determined weight of the feed block 41. In this way a desired filling as regards the weight of the mixing tub 12 with different successive feed blocks can be achieved.

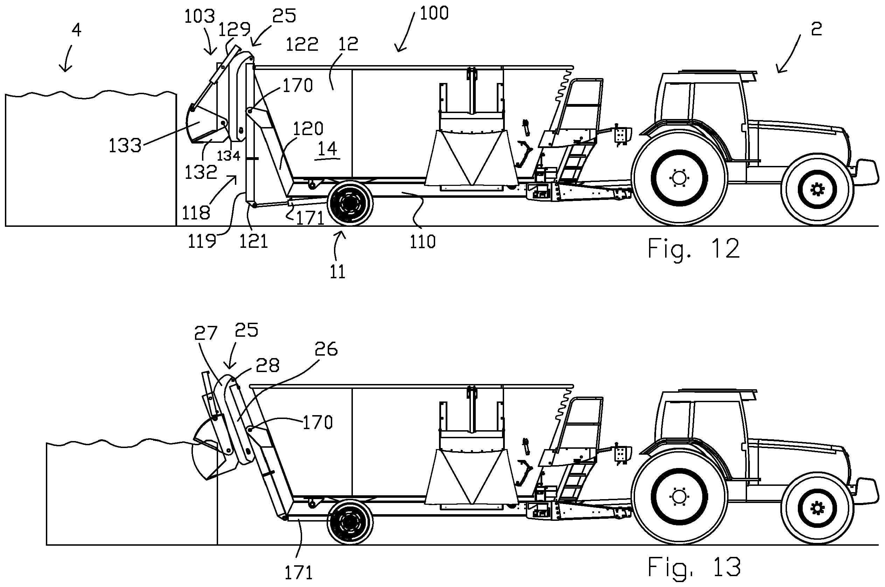

Figures 12 and 13 show a mixer feeder 100, being another preferred embodiment of a mixer feeder according to the invention. Parts of the mixer feeder 100 that are identical to the above-described parts of the mixer feeder 1 according to the invention are indicated by the same numerals.

The mixer feeder 100 has a guide means 118, along which the connecting element 25 is guided in height direction. The guide means 118 is made up of two mutually parallel guide beams 119 extending in height direction. At a location between the upper end 122 and the lower end 121 of the guide beams 119, more specifically at about 60% of the height thereof, the guide beams 119 are connected to a chassis part 120 of the chassis 110, being pivotable about a horizontal pivot 170 that extends in the transverse direction of the mixer feeder 100. Between the chassis 110 and the lower end 121 of the chassis beams 119, two respective hydraulic cylinders 171 are provided for effecting a pivoting movement of the guide means 118 about the horizontal pivot 170.

In figure 12, the guide means 118 is in the non-pivoted or neutral position, in which the guide beams 119 extend at least substantially vertically. In figure 13, the guide means 118 is in the pivoted position, in which the guide beams 119 extend at an angle of about 10 degrees relative to the vertical, wherein the lower end 121 is oriented forward, or in other words, to the side remote from the side where the loading device 3 is located.

Connected to the adapter part 27 is a loading device in the form of a so-called feed scooper 103. The feed scooper 103 has an L-shaped base part 132, which is adapted to be connected to the adapter part 27 and which, on a bottom side thereof, comprises a first gripping part which extends rearward, away from the adapter part 27, and which is designed to be inserted into a feed pit. The feed scooper 103 further comprises a cutting element 133 which is pivotally connected to the base part 132 about a horizontal pivot 134 and which is designed to take a chunk of feed from the feed pit by pivoting toward the gripping part of the base part 132, as illustrated in figure 13. A hydraulic cylinder 129 which is operative between the base part 132 and the cutting element 133 enables the cutting element 133 to pivot about the pivot 134.

By pivotally providing the guide means 118 in the above-described manner, the mixer feeder 100 need not by definition be reversed for introducing the loading device into the feed pit. This movement is now effected by pivoting the guide means rearward, away from the chassis, as a result of which the loading device 103, in particular in a lower position thereof, will also move rearward along the guide means 118.

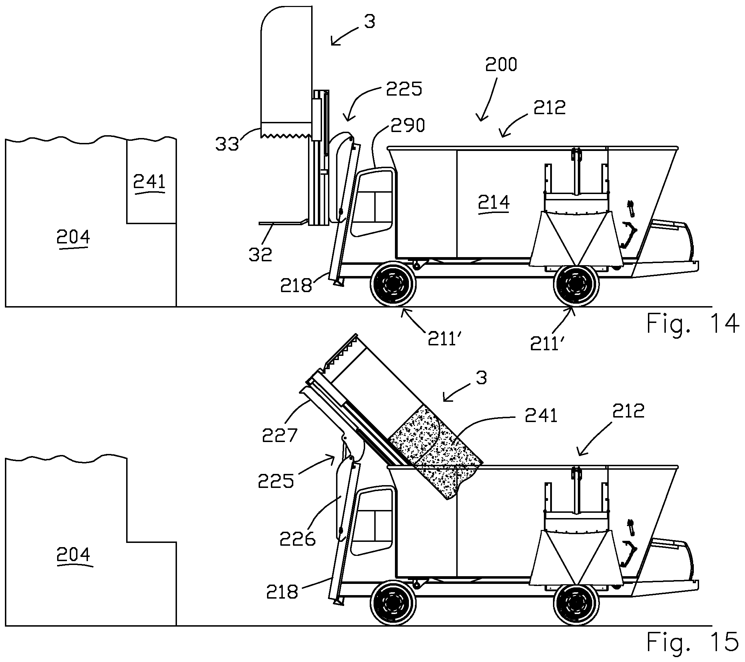

In contrast to the mixer feeders 1 and 100 described in the foregoing, the mixer feeder 200 according to the invention as shown in figures 14 and 15 is embodied as an independently mobile vehicle, and to that end comprises a drive motor and a steerable axle 211', and furthermore a non-steerable axle 211 comparable to the axle 11 described in the foregoing. The upright, circumferential side wall 214 of the mixing tub 212 is more or less vertical on one short side, being a front side of the vehicle 200, in contrast to the side wall of the mixer feeders 1 and 100, which extends obliquely outward from the bottom to the top, at least at the short ends as shown in figures 1-13. In this way space is created for a driver's cabin 290 between the mixing tub 212 and the guide means 218, which corresponds to the guide means 18 as described above, but which is oriented at a small angle to the vertical in the case of the mixer feeder 200, with a lower end located further away from the mixing tub 212 than an upper end thereof. The connecting element 225 has a base part 226 and a connecting part 227, similar to the connecting element 25, which connecting element 225 is configured so that, as shown in figure 14, a loading device connected to the connecting element 225 is oriented at least substantially vertically in the neutral position of the connecting element, or in other words, at least substantially in the normal position of use for detaching a feed block 241 from a feed pit 204. Analogously to the manner described above within the framework of the description of the mixer feeder 1, a feed block 241 can be detached by inserting the tine board 32 into the feed pit 204, in this case by driving the mixer feeder 200 forward, and then moving the cutting element 33 of the loading device 3 downward. Subsequently, the feed block 241 is deposited into the mixing tub by pivoting the connecting element 225 from the neutral position to the pivoted position, in the same manner as described above for the connecting element 25.

A driver can be seated in the driver's cabin 290 and carry out all relevant operations, such as steering the vehicle 200 and operating the connecting element 225 and the loading device 3.

In an alternative embodiment of a mixer feeder according to the invention, the mixer feeder is a drawn vehicle like the mixer feeders 1 and 100, but in this case a cabin, such as the cabin 290, is present, in this case only for operating the connecting element and the loading device.

In one embodiment of a mixer feeder according to the invention, a guide means comparable to the above-described guide means 118, which is movable, for example pivotable, relative to the mixing tub, is likewise conceivable in combination with a cabin, such as the cabin 290.

Figures 16-21C show a mixer feeder 300, being another preferred embodiment of a mixer feeder according to the present invention. Parts of the mixer feeder 300 whose function corresponds to those used in the mixer feeder 1, 100 and 200 according to the invention are indicated by the same numerals, in this case starting with 300, however.

Like the mixer feeder 200, the mixer feeder 300 is embodied as an independently mobile vehicle and is to that end provided with a drive motor and a steerable axle 211' and furthermore a non-steerable axle 211. The mixer feeder 300 has a mixing tub 312 comprising an upright side wall 314. In the mixing tub 312, two driven rotatable mixing elements in the form of augers are provided, which augers are not shown in figures 16-21C but which may be configured similarly to the augers 15.

Because the mixing tub 312 is open on the upper side, it can be loaded, or in other words, filled by depositing feed or feed components to be mixed therein from above. The mixing tub 312 is supported on the chassis 310 of the vehicle 300. A guide means 318 is provided on a short, front side of the mixer feeder 300, which guide means is made up of two mutually parallel, upwardly extending guide beams 319. Each one of the guide beams 319 extends upward and slightly obliquely rearward with a first, lower part 381 thereof, which is straight. The first part 381 merges, via a curved part 382, into a second part 383 which is likewise straight and which extends rearward from the curved part, slightly sloping upward, to the wall 314 of the mixing tub 312. As shown in particular in figures 16 and 17, the above-described arrangement of the guide beams 319 with the curved part 382 creates space for a driver's cabin 319 behind and under the guide means 318 and in front of the mixing tub 312. The first part 381 of the guide means 318 extends along the front of the driver's cabin 390, and the second part 383 extends above the driver's cabin 390.

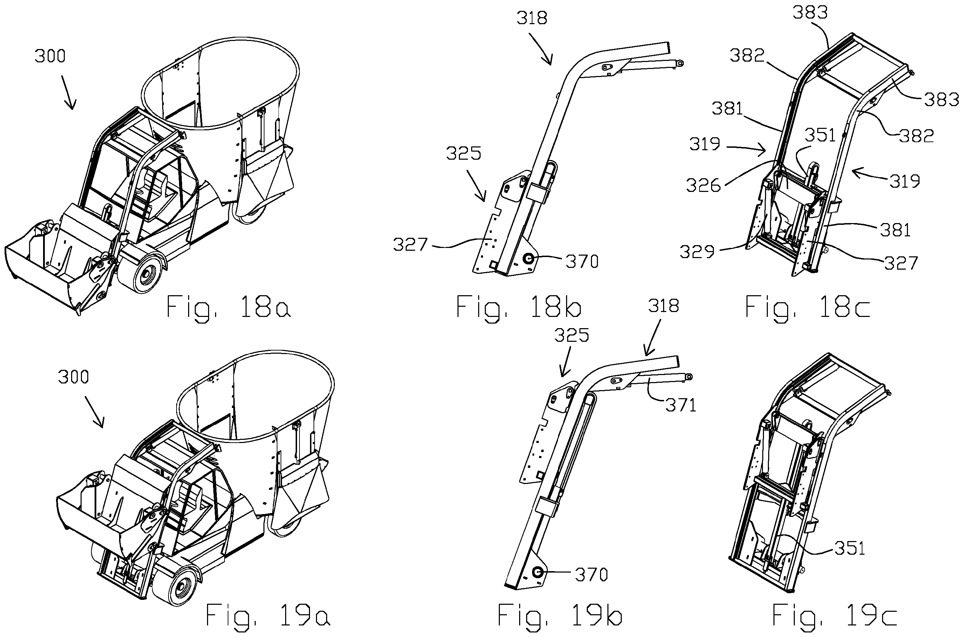

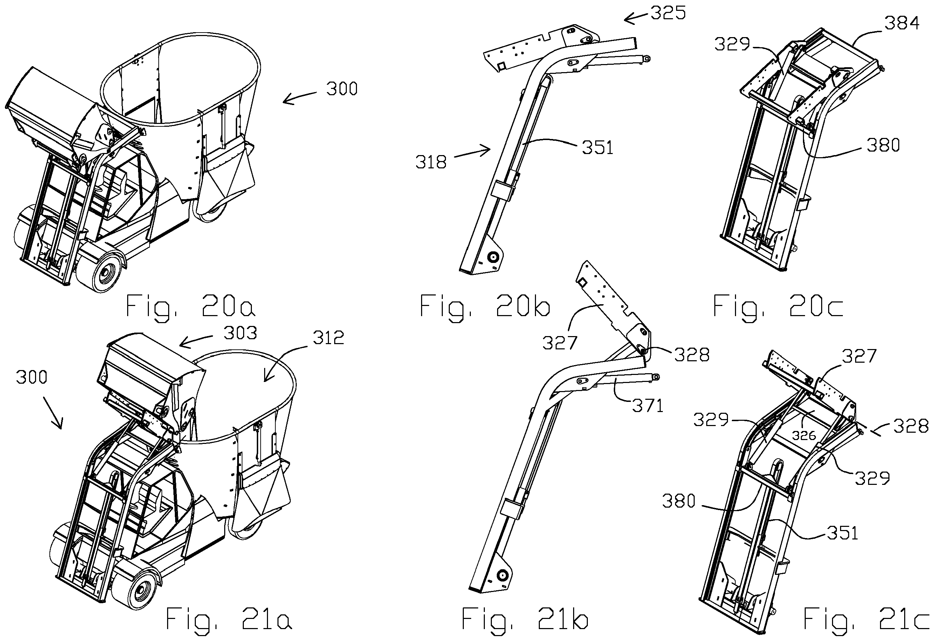

The mixer feeder 300 further comprises a connecting element 325 which is connected to the guide beams 319 in such a manner as to be movable in the height direction, or in other words, in the longitudinal direction of the guide beams 319, between a higher position as shown in figures 17 and 21A and a lower position as shown in figures 16 and 18A.

The mixer feeder 300 comprises a hydraulic cylinder 351 which is operative between the chassis 310 and the connecting element 325 for changing the position in the height direction of the connecting element 325 relative to the chassis 310, and thus relative to the mixing tub 312. The connecting element 325 comprises a base part 326 provided with running wheels that roll in the C-shaped space of the chassis beams 319 and is thus connected to the chassis beams 319. The connecting part 325 further comprises an adapter part 327, which is pivotally connected to the base part 326 about a horizontal pivot 328 that extends in the transverse direction of the mixer feeder. The adapter part 327 is designed to be detachably connected to the loading device 303 and is to that end provided with various connecting elements, such as bolt holes. Similarly to the loading device 103, the loading device 303 has an L-shaped base part 332 which is designed to be connected to the adapter part 327 and which has a first gripping part on the bottom side, which extends forward away from the adapter part 327 and which is designed to be inserted into the feed pit. The loading device 303 further comprises a cutting element 333, which is pivotally connected to the L-shaped base part 332 about a horizontal pivot and which is designed to take a chunk of feed from the feed pit by pivoting toward the gripping part of the L-shaped base part 332. The cutting element 333 can be pivoted about its pivot by a hydraulic cylinder (not shown) which is operative between the L-shaped base part 332 and the cutting element 333.

In the higher position shown in figures 21A-21C, for example, the adapter part 327 is pivoted about the pivot 328 relative to the base part 326 by the pivot means of the connecting element 325, which are made up of two hydraulic cylinders 329. Said pivot means 329 further form part of the moving means that comprise the hydraulic cylinder 351, since the cylinders 329 are also configured to move the connecting element 325 from an intermediate position shown in figures 20A-20C, i.e. a position between the lower position and the higher position, to the higher position shown in figures 21A-21C. To realise this, a supporting element 318 embodied as a support beam is provided. Like the base part 326 of the connecting element 325, the support beam 380 is guided between the C-shaped guide beams 319. The hydraulic cylinder 351 is connected to the support beam 380, and thus the support beam 380 can be moved in height direction along the first part 381 of the guide means 318. The height position of the support beam 380 that is shown in figures 20B-21C is the highest position that the support beam 380 can reach. At that moment the hydraulic cylinders 329 will be activated, which cylinders are on the one hand supported on the support beam 380 and which are on the other hand connected to the adapter part 327 of the connecting element 325. By extending the hydraulic cylinders 329, or, in others words, causing them to telescope out, the base part 326 is guided further upward along the second part 383 of the guide means 318 to the higher position at the free end of the second part 383 of the guide means 318. The base part 326 is prevented from moving any further here by a short end stop plate 384. Then the hydraulic cylinders 329 are further extended (by supplying a hydraulic medium, such as oil, under pressure), as a result of which the adapter part 327 will pivot about the pivot 328 from the neutral position shown in figures 18B-20C to a pivoted position shown in figures 21B-21C. A comparison of figures 20B and 21B shows that the adapter part 327 pivots through an angle of about 50 degrees relative to the base part.

The guide means 318 is movable in the longitudinal direction of the vehicle 300, more specifically about a pivot 370 that forms a connection between the chassis 310 and the guide means 318. The pivot 370, which extends horizontally and in the transverse direction of the vehicle 300, is provided at the lower end of the guide beams 319. On the upper side of the guide means 318, two cylinders 371 are provided just below the second part 383 of the guide beams 319, which cylinders form further moving means and which are connected, with a first end thereof, to guide beams 319 or at least a reinforcing plate at the location of the bend part 382 thereof, and which are on the other hand connected to the chassis via the mixing tub 312. By telescoping the hydraulic cylinders 371 in and out, a pivoting movement of the guide means 318 relative to the chassis 310 of the vehicle, and thus relative to the mixing tub 312, can be effected, which movement is in principle comparable to the movement made in the mixer feeder 100 shown in figures 12 and 13.

## Claims

1. A mixer feeder (1) for providing feed to cattle, comprising:
- a chassis (10),
- at least two wheels (11) connected to the chassis for rolling support of the mixer feeder on a ground surface,
- a mixing tub (12) for the feed mounted on the chassis, which comprises at least a bottom (13) and an upright wall (14),
- at least one mixing element (15) provided in the mixing tub for mixing the feed,
- a connecting element (25) for connection to a loading device (3) for loading the mixing tub with feed by means of the loading device in use,
- a guide means (18) provided on the mixer feeder, which is configured to form a guide in height direction for the connecting element,
- moving means (51) connected to the connecting element, which are designed to move the connecting element in height direction along the guide means, between a lower position and a higher position, relative to the mixing tub,
wherein the connecting element is configured to pivot the loading device about an at least substantially horizontal pivot, between a neutral position and a pivoted position, relative to the guide means in said higher position, such that in the pivoted position feed is transferred from the loading device, across the upright wall, into the mixing tub in use **characterized in that** the connecting element comprises a base part (26) and an adapter part (27) which is connected to the base part in such a manner as to be pivotable between the neutral position and the pivoted position about an at least substantially horizontal pivot (28), wherein the adapter part is designed for being connected to the loading device and wherein the base part is connected to the guide means in such a manner as to be movable in height direction along the guide means.

2. A mixer feeder according to claim 1, wherein the at least substantially horizontal pivot is provided at the location of an upper end of the connecting element.

3. A mixer feeder according to claim 1 or 2, wherein the connecting element comprises pivot means (29) which are operative between the base part and the adapter part for causing the adapter part to pivot relative to the base part, wherein the pivot means preferably comprise a hydraulic or pneumatic cylinder for pivoting the adapter part relative to the base part.

4. A mixer feeder according to claim 3, wherein the pivot means also form part of the moving means.

5. A mixer feeder according to claim 4, comprising a support element which is movable in height direction along the guide means (18), means, wherein the moving means comprise a first moving element which is connected to the support element and which is operatively connected to the chassis for moving the support element in height direction along the guide means, wherein the pivot means, which also form a second moving element, are connected to the support element and to the adapter part of the connecting element and are also designed to move the connecting element in height direction along the guide means.

6. A mixer feeder according to one or more of the preceding claims, wherein the guide means (18) is movable in the longitudinal direction of the mixer feeder relative to the chassis.

7. A mixer feeder according to claim 6, wherein the guide means is pivotally connected to the chassis about a further horizontal pivot (170), wherein the mixer feeder comprises further moving means (171) which are operative between the guide means and the chassis for pivoting the guide means about said further horizontal pivot relative to the chassis, the further moving means preferably comprising a further hydraulic or pneumatic cylinder which is operatively connected to the chassis and which is connected to the guide means.

8. A mixer feeder according to claim 7, wherein the guide means is pivotable about said further horizontal pivot relative to the chassis, between a neutral position, in which the guide means is at least substantially parallel to the vertical, and a pivoted position at an angle of 5 to 20 degrees, preferably 8 to 15 degrees, relative to the vertical, in which a lower end of the guide means is pivoted in the direction of the mixing tub, at least in the pivoted position.

9. A mixer feeder according to one or more of the preceding claims, wherein the guide means comprises a lower, at least substantially straight first part (381), which first part merges into a higher, at least substantially straight second part (383) via a part (382) which is curved in a direction away from the side of the guide means where the loading device is positioned in use, which straight second part includes an angle with the first part that ranges between about 90 to 150 degrees, preferably between about 100 to 130 degrees.

10. A mixer feeder according to one or more of the preceding claims, also comprising the loading device, the loading device comprising two parallel, spaced apart further guide beams (31) extending in the height direction, a tine board (32) comprising a number of mutually parallel pins each extending away from the mixer feeder, which tine board is fixedly connected to the further guide beams on a bottom side thereof, and a cutting element comprising two first cutting parts which are connected to a respective further guide beam, being movable in height direction along said guide beam and extending away therefrom in parallel relationship, which two first cutting parts are connected at a location spaced from the further guide beams by a second cutting part which extends transversely to the first cutting parts, wherein the cutting element is designed to detach a block of feed from a feed pit by moving along the guide beams in the direction of the tine board, the loading device also comprising a sliding plate (36), provided between the two further guide beams, which is designed to cause the feed to slide over the sliding plate upon pivoting of the loading device about the at least substantially horizontal pivot in the higher position for causing feed to be transferred across the upright wall into the mixing tub in use.

11. A mixer feeder according to one or more of the preceding claims, comprising a discharge opening in the upright side wall of the mixing tub on at least one longitudinal side of the mixer feeder, preferably on both longitudinal sides, for discharging feed from the mixing tub for the purpose of supplying feed from the mixing tub to cattle, which discharge opening can be closed by means of a closure element (16).

12. A mixer feeder according to one or more of the preceding claims, embodied as independently mobile and drivable vehicle, for this purpose comprising a drive motor for moving the mixer feeder over a ground surface, and at least two axles provided with wheels, at least one of which axles is a steered axle

13. A mixer feeder according to claim 9 or a claim dependent thereon, and according to claim 12, wherein a driver's cabin (290,390) is provided between the mixing tub and the guide means, wherein the first part of the guide means extends substantially in front of the driver's cabin and wherein the second part of the guide means extends substantially over the driver's cabin in the direction of the mixing tub.

14. A method for loading feed into a mixing tub (12) of a mixer feeder (1) according to one or more of the preceding claims 1-13, comprising the steps of:
a) introducing at least part of the loading device (3) into a feed pit,
b) detaching an amount of feed from the feed pit by means of the loading device,
c) moving the amount of feed away from the feed pit by means of the loading device, wherein the amount of feed is transferred into the mixing tub, across the upright wall of the mixing tub, by pivoting the loading device about the horizontal pivot to the pivoted position relative to the guide means,
the method further comprising the successive steps of
- determining, as part of step b), using sensor means, a dimension of the amount of feed to be detached,
- determining, as part of step c), the weight of the amount of feed loaded into the mixing tub during the aforesaid step c), using weighing means that are operative on the mixing tub,
- determining a relation between dimension and weight of feed from the feed pit on the basis of the weight and the dimension as determined,
- determining a dimension of an amount of feed to be detached during a next step b) in dependence on a predetermined desired total weight of feed to be loaded into the mixing tub and the relation as determined, and
- detaching an amount of feed having the determined dimension from the feed pit during the aforesaid next step b).

15. A method according to claim 14, wherein as part of the aforesaid next step b) of detaching an amount of feed having the determined dimension from the feed pit,
- the loading device is introduced into the feed pit for the purpose of detaching the further amount of feed under a previously removed amount of feed, at such a predetermined lower position in the feed pit that a distance between the part of the loading device introduced into the feed pit and a free upper surface of the feed pit at the location of the amount of feed to be detached corresponds to the dimension.

## Patentansprüche

1. Futtermischer (1) zum Bereitstellen von Futter an Vieh, umfassend:
- ein Chassis (10)
- wenigstens zwei mit dem Chassis verbunden Räder (11) zur rollenden Abstützung des Futtermischers auf einer Bodenfläche,
- eine an dem Chassis montierte Mischerwanne (12) für das Futter, die wenigstens einen Boden (13) und eine aufrechte Wand (14) umfasst,
- wenigstens ein in der Mischerwanne vorgesehenes Mischerelement (15) zum Mischen des Futters,
- ein Verbindungselement (25) zur Verbindung mit einer Beladevorrichtung (3) zum Beladen des Mischertanks mit Futter mittels der verwendeten Beladevorrichtung
- ein an dem Futtermischer vorgesehenes Führungsmittel (18), das konfiguriert ist, um eine Führung in Hochrichtung für das Verbindungselement zu bilden,
- mit dem Verbindungselement verbundene Antriebsmittel (51), die ausgebildet sind, um das Verbindungselement in Hochrichtung entlang des Führungsmittels zwischen einer unteren Position und einer oberen Position relativ zu der Mischerwanne zu bewegen,
wobei das Verbindungselement konfiguriert ist, um die Beladevorrichtung um eine wenigstens im Wesentlichen horizontale Achse zwischen einer neutralen Position und einer geschwenkten Position relativ zu dem Führungsmittel in der genannten oberen Position zu schwenken, sodass in der geschwenkten Position Futter von der Beladevorrichtung über die aufrechte Wand in die verwendete Mischerwanne überführt wird,
**dadurch gekennzeichnet, dass**
das Verbindungselement einen Basisabschnitt (26) und einen Adapterabschnitt (27) umfasst, wobei der Adapterabschnitt derart mit dem Basisabschnitt verbunden ist, dass der Adapterabschnitt zwischen der neutralen Position und der geschwenkten Position um eine wenigstens im Wesentlichen horizontale Achse (28) schwenkbar ist, wobei der Adapterabschnitt ausgebildet ist, um mit der Beladevorrichtung verbunden zu sein, und wobei der Basisabschnitt mit dem Führungsmittel derart verbunden ist, dass der Basisabschnitt in Hochrichtung entlang des Führungsmittels bewegbar ist.

2. Futtermischer nach Anspruch 1, wobei die wenigstens im Wesentlichen horizontale Achse an der Position eines oberen Endes des Verbindungselements vorgesehen ist.

3. Futtermischer nach Anspruch 1 oder 2, wobei das Verbindungselement Schwenkmittel (29) umfasst, die zwischen dem Basisabschnitt und dem Adapterabschnitt wirksam sind, um zu bewirken, dass der Adapterabschnitt relativ zu dem Basisabschnitt schwenkt, wobei die Schwenkmittel vorzugsweise einen hydraulischen oder pneumatischen Zylinder zum Schwenken des Adapterabschnitts relativ zu dem Basisabschnitt umfasst.

4. Futtermischer nach Anspruch 3, wobei die Schwenkmittel auch einen Teil der Antriebsmittel bilden.

5. Futtermischer nach Anspruch 4 umfassend ein Trägerelement, das in Hochrichtung entlang des Führungsmittels (18) bewegbar ist, wobei die Antriebsmittel ein erstes Antriebselement umfassen, das mit dem Trägerelement verbunden ist und das mit dem Chassis wirkend verbunden ist zum Bewegen des Trägerelements in Hochrichtung entlang des Führungsmittels, wobei die Schwenkmittel, die auch ein zweites Antriebselement bilden, mit dem Trägerelement und mit dem Adapterabschnitt des Verbindungselements verbunden sind und auch ausgebildet sind, um das Verbindungselement in Hochrichtung entlang des Führungsmittels zu bewegen.

6. Futtermischer nach einem oder mehreren der vorherigen Ansprüche, wobei das Führungsmittel (18) in der longitudinalen Richtung des Futtermischers relativ zu dem Chassis bewegbar ist

7. Futtermischer nach Anspruch 6, wobei das Führungsmittel mit dem Chassis um eine weitere horizontale Achse (170) schwenkbar verbunden ist, wobei der Futtermischer weitere Antriebsmittel (171) umfasst, die zwischen dem Führungsmittel und dem Chassis zum Schwenken des Führungsmittels um die genannte weitere horizontale Achse relativ zu dem Chassis wirksam sind, wobei die weiteren Antriebsmittel vorzugsweise einen weiteren hydraulischen oder pneumatischen Zylinder umfassen, der wirkend mit dem Chassis verbunden ist und der mit dem Führungsmittel verbunden ist.

8. Futtermischer nach Anspruch 7, wobei das Führungsmittel um die genannte weitere horizontale Achse relativ zu dem Chassis schwenkbar ist zwischen einer neutralen Position, in der das Führungsmittel wenigstens im Wesentlichen parallel zu der Vertikalen ist, und einer geschwenkten Position mit einem Winkel von 5 bis 20 Grad, vorzugsweise 8 bis 15 Grad, gegenüber der Vertikalen, in der ein unteres Ende des Führungsmittels in Richtung der Mischerwanne geschwenkt ist, wenigstens in der geschwenkten Position.

9. Futtermischer nach einem oder mehreren der vorherigen Ansprüche, wobei das Führungsmittel einen unteren, wenigstens im Wesentlichen geraden ersten Abschnitt (381) aufweist, der in einen oberen, wenigstens im Wesentlichen geraden zweiten Abschnitt (383) über einen Abschnitt (382) übergeht, der in einer Richtung weg von der Seite des Führungsmittels, auf der die Beladungsvorrichtung im Einsatz positioniert ist, gebogen ist, wobei der gerade zweite Abschnitt einen Winkel mit dem ersten Abschnitt einschließt, der zwischen circa 90 Grad und 150 Grad, vorzugsweise zwischen 100 Grad und 130 Grad, liegt.

10. Futtermischer nach einem oder mehreren der vorherigen Ansprüche, auch umfassend die Beladungsvorrichtung, wobei die Beladungsvorrichtung Folgendes umfasst:
- zwei parallele, voneinander beabstandete sich in die Hochrichtung erstreckende weitere Führungsbalken (31),
- eine Dornenplatte (32) umfassend eine Anzahl zueinander paralleler Dorne, von denen sich jeder weg von dem Futtermischer erstreckt, wobei die Dornenplatte unbeweglich mit den weiteren Führungsbalken an einer Unterseite der weiteren Führungsbalken verbunden ist, und
- ein Schneidelement umfassend zwei erste Schneidabschnitte, die jeweils mit einem weiteren Führungsbalken verbunden sind, die in Hochrichtung entlang des genannten Führungsbalkens bewegbar sind und sich parallel zueinander weg von dem genannten Führungsbalken erstrecken, wobei die zwei ersten Schneidabschnitte an einer von den weiteren Führungsbalken beabstandeten Position durch einen zweiten Schneidabschnitt verbunden sind, der sich quer zu den ersten Schneidabschnitten erstreckt, wobei das Schneidelement ausgebildet ist, um einen Futterblock durch Bewegen des Schneidelements entlang der Führungsbalken in Richtung der Dornenplatte aus einem Futtervorrat abzutrennen,
wobei die Beladungsvorrichtung auch eine zwischen den zwei weiteren Führungsbalken vorgesehene Rutschplatte (36) umfasst, die ausgebildet ist, um zu bewirken, dass das Futter über die Rutschplatte rutscht, wenn die Beladungsvorrichtung um die wenigstens im Wesentlichen horizontale Achse in der oberen Position schwenkt, um zu bewirken, dass das Futter über die aufrechte Wand in die verwendete Mischerwanne überführt wird.

11. Futtermischer nach einem oder mehreren der vorherigen Ansprüche umfassend eine Entladeöffnung in der aufrechten Seitenwand der Mischerwanne auf wenigstens einer Längsseite des Futtermischers, vorzugsweise auf beiden Längsseiten, zum Entladen von Futter aus dem Futtermischer, um Futter von der Mischerwanne an Vieh bereitzustellen, wobei die Entladeöffnung mittels eines Verschlusselements (16) verschlossen werden kann.

12. Futtermischer nach einem oder mehreren der vorherigen Ansprüche, ausgeführt als eigenständig bewegbares und fahrbares Fahrzeug, zu diesem Zweck umfassend einen Antriebsmotor zum Bewegen des Futtermischers über eine Bodenfläche und wenigstens zwei mit Rädern versehene Achsen, wobei von den Achsen wenigstens eine Achse eine gesteuerte Achse ist.

13. Futtermischer nach Anspruch 9 oder einem davon abhängigen Anspruch und nach Anspruch 12, wobei eine Fahrerkabine (290, 390) zwischen der Mischerwanne und dem Führungsmittel vorgesehen ist, wobei sich der erste Abschnitt des Führungsmittels im Wesentlichen vor der Fahrerkabine erstreckt und wobei sich der zweite Abschnitt des Führungsmittels im Wesentlichen über der Fahrerkabine in Richtung der Mischerwanne erstreckt.

14. Verfahren zum Laden von Futter in eine Mischerwanne (12) eines Futtermischers (1) nach einem der vorherigen Ansprüche 1 bis 13, umfassend die folgenden Schritte:
a) Einführen wenigstens eines Teils der Beladungsvorrichtung (3) in einen Futtervorrat,
b) Abtrennen einer Menge an Futter aus dem Futtervorrat mittels der Beladungsvorrichtung,
c) Bewegen der Menge an Futter weg von dem Futtervorrat mittels der Beladungsvorrichtung, wobei die Menge an Futter über die aufrechte Wand der Futterwanne durch Schwenken der Beladungsvorrichtung um die horizontale Achse in die geschwenkten Position relativ zu dem Führungsmittel in die Mischerwanne überführt wird,
wobei das Verfahren weiter die folgenden aufeinanderfolgenden Schritte umfasst:
- Ermitteln, als Teil des Schritts b), einer Dimension der abzutrennenden Menge an Futter unter Verwendung von Sensormitteln,
- Ermitteln, als Teil des Schritts c), des Gewichts der während des zuvor genannten Schritts c) in die Mischerwanne geladenen Menge an Futter unter Verwendung von Wiegemitteln, die an der Mischerwanne wirksam sind,
- Ermitteln eines Verhältnisses zwischen Dimension und Gewicht des Futters aus dem Futtervorrat auf Basis des ermittelten Gewichts und der ermittelten Dimension,
- Ermitteln einer während eines nächsten Schritts b) abzutrennenden Dimension einer Menge an Futter in Abhängigkeit einer vorbestimmten gewünschten Gesamtmasse an in die Mischerwanne zu ladendes Futter und des ermittelten Verhältnisses und
- Abtrennen einer die ermittelte Dimension aufweisenden Menge an Futter aus dem Futtervorrat während des zuvor genannten nächsten Schritts b).

15. Verfahren nach Anspruch 14, wobei als Teil des zuvor genannten nächsten Schritts b), wobei ein Abtrennen einer die ermittelte Dimension aufweisenden Menge an Futter aus dem Futtervorrat erfolgt,
- die Beladungsvorrichtung in den Futtervorrat eingeführt wird, um die weitere Menge an Futter unter einer zuvor entfernten Menge an Futter an solch einer vorbestimmten unteren Position in dem Futtervorrat abzutrennen, dass ein Abstand zwischen dem in den Futtervorrat eingeführten Abschnitt der Beladungsvorrichtung und einer freien oberen Oberfläche des Futtervorrats an der Position der abzutrennenden Menge an Futter der Dimension entspricht.

## Revendications

1. Mélangeur-distributeur (1) pour fournir des aliments au bétail, comprenant :
- un châssis (10),
- au moins deux roues (11) reliées au châssis pour le support en roulement du mélangeur-distributeur sur une surface de sol,
- une cuve de mélange (12) pour les aliments montée sur le châssis, qui comprend au moins un fond (13) et une paroi verticale (14),
- au moins un élément de mélange (15) prévu dans la cuve de mélange pour mélanger les aliments,
- un élément de liaison (25) destiné à être relié à un dispositif de chargement (3) pour charger la cuve de mélange avec des aliments au moyen du dispositif de chargement lors de l'utilisation,
- un moyen de guidage (18) prévu sur le mélangeur-distributeur, qui est configuré pour former un guide dans une direction de hauteur pour l'élément de liaison,
- des moyens de déplacement (51) reliés à l'élément de liaison, qui sont conçus pour déplacer l'élément de liaison dans la direction de la hauteur le long du moyen de guidage, entre une position inférieure et une position supérieure, par rapport à la cuve de mélange,
où l'élément de liaison est configuré pour faire pivoter le dispositif de chargement autour d'un pivot au moins essentiellement horizontal, entre une position neutre et une position de pivotement, par rapport au moyen de guidage dans ladite position supérieure, de sorte que, dans la position de pivotement, les aliments soit transférés depuis le dispositif de chargement, à travers la paroi verticale, dans la cuve de mélange lors de l'utilisation, **caractérisé en ce que** l'élément de liaison comprend une partie de base (26) et une partie d'adaptateur (27) qui est reliée à la partie de base de manière à pouvoir pivoter entre la position neutre et la position de pivotement autour d'un pivot au moins essentiellement horizontal (28), où la partie d'adaptateur est conçue pour être reliée au dispositif de chargement et où la partie de base est reliée au moyen de guidage de manière à être mobile dans une direction de hauteur le long du moyen de guidage.

2. Mélangeur-distributeur selon la revendication 1, dans lequel le pivot au moins essentiellement horizontal est prévu au niveau de l'emplacement d'une extrémité supérieure de l'élément de liaison.

3. Mélangeur-distributeur selon la revendication 1 ou 2, dans lequel l'élément de liaison comprend des moyens de pivotement (29) qui fonctionnent entre la partie de base et la partie d'adaptateur pour amener la partie d'adaptateur à pivoter par rapport à la partie de base, où
les moyens de pivotement comprennent de préférence un vérin hydraulique ou pneumatique pour faire pivoter la partie d'adaptateur par rapport à la partie de base.

4. Mélangeur-distributeur selon la revendication 3, dans lequel les moyens de pivotement font également partie des moyens de déplacement.

5. Mélangeur-distributeur selon la revendication 4, comprenant un élément de support qui est mobile dans une direction de hauteur le long du moyen de guidage (18), où les moyens de déplacement comprennent un premier élément de déplacement qui est relié à l'élément de support et qui est relié de manière fonctionnelle au châssis pour déplacer l'élément de support dans une direction de hauteur le long du moyen de guidage, où les moyens de pivotement, qui forment également un deuxième élément de déplacement, sont reliés à l'élément de support et à la partie d'adaptateur de l'élément de liaison et sont également conçus pour déplacer l'élément de liaison dans une direction de hauteur le long du moyen de guidage.

6. Mélangeur-distributeur selon une ou plusieurs des revendications précédentes, dans lequel le moyen de guidage (18) est mobile dans la direction longitudinale du mélangeur-distributeur par rapport au châssis.

7. Mélangeur-distributeur selon la revendication 6, dans lequel le moyen de guidage est relié en pivotement au châssis autour d'un pivot horizontal supplémentaire (170), où le mélangeur-distributeur comprend des moyens de déplacement supplémentaires (171) qui fonctionnent entre le moyen de guidage et le châssis pour faire pivoter le moyen de guidage autour dudit pivot horizontal supplémentaire par rapport au châssis, les moyens de déplacement supplémentaires comprenant de préférence un vérin hydraulique ou pneumatique supplémentaire qui est relié de manière fonctionnelle au châssis et qui est relié au moyen de guidage.

8. Mélangeur-distributeur selon la revendication 7, dans lequel le moyen de guidage peut pivoter autour dudit pivot horizontal supplémentaire par rapport au châssis, entre une position neutre, dans laquelle le moyen de guidage est au moins essentiellement parallèle à la verticale, et une position de pivotement à un angle compris entre 5 et 20 degrés, de préférence entre 8 et 15 degrés, par rapport à la verticale, dans laquelle une extrémité inférieure du moyen de guidage pivote dans la direction de la cuve de mélange, au moins dans la position de pivotement.

9. Mélangeur-distributeur selon une ou plusieurs des revendications précédentes, dans lequel le moyen de guidage comprend une première partie inférieure, au moins essentiellement droite (381), laquelle première partie fusionne avec une deuxième partie supérieure, au moins essentiellement droite (383) par l'intermédiaire d'une partie (382) qui est incurvée dans une direction s'éloignant du côté du moyen de guidage où le dispositif de chargement est positionné lors de l'utilisation, laquelle deuxième partie droite forme un angle avec la première partie qui est compris entre environ 90 et 150 degrés, de préférence entre environ 100 et 130 degrés.

10. Mélangeur-distributeur selon une ou plusieurs des revendications précédentes, comprenant également le dispositif de chargement, le dispositif de chargement comprenant deux poutres de guidage supplémentaires (31) parallèles, espacées l'une de l'autre s'étendant dans la direction de la hauteur, une plaque à dents (32) comprenant un certain nombre de broches mutuellement parallèles s'étendant chacune loin du mélangeur-distributeur, laquelle plaque à dents est reliée de manière fixe aux poutres de guidage supplémentaires sur un côté inférieur de celles-ci, et un élément de coupe comprenant deux premières parties de coupe qui sont reliées à une poutre de guidage supplémentaire respective, étant mobile dans une direction de hauteur le long de ladite poutre de guidage et s'étendant loin de celle-ci selon une relation parallèle, lesquelles deux premières parties de coupe sont reliées à un emplacement espacé des poutres de guidage supplémentaires par une deuxième partie de coupe qui s'étend transversalement aux premières parties de coupe, où l'élément de coupe est conçu pour détacher un bloc d'aliments d'une fosse pour aliments par déplacement le long des poutres de guidage dans la direction de la plaque à dents, le dispositif de chargement comprenant également une plaque coulissante (36), prévue entre les deux poutres de guidage supplémentaires, qui est conçue pour amener les aliments à glisser sur la plaque coulissante lors du pivotement du dispositif de chargement autour du pivot au moins essentiellement horizontal dans la position supérieure pour provoquer le transfert des aliments à travers la paroi verticale dans la cuve de mélange lors de l'utilisation.

11. Mélangeur-distributeur selon une ou plusieurs des revendications précédentes, comprenant une ouverture de décharge dans la paroi latérale verticale de la cuve de mélange sur au moins un côté longitudinal du mélangeur-distributeur, de préférence sur les deux côtés longitudinaux, pour décharger des aliments de la cuve de mélange dans le but de fournir les aliments depuis la cuve de mélange au bétail, laquelle ouverture de décharge peut être fermée au moyen d'un élément de fermeture (16).

12. Mélangeur-distributeur selon une ou plusieurs des revendications précédentes, incorporé en tant que véhicule indépendamment mobile et pouvant être entraîné, comprenant à cet effet un moteur d'entraînement pour déplacer le mélangeur-distributeur sur une surface de sol, et au moins deux essieux équipés de roues, au moins l'un de ces essieux est un essieu directeur.

13. Mélangeur-distributeur selon la revendication 9 ou une revendication qui en dépend, et selon la revendication 12, dans lequel une cabine de conduite (290, 390) est prévue entre la cuve de mélange et le moyen de guidage, où la première partie du moyen de guidage s'étend essentiellement devant la cabine de conduite et où la deuxième partie du moyen de guidage s'étend essentiellement sur la cabine de conduite dans la direction de la cuve de mélange.

14. Procédé de chargement d'aliments dans une cuve de mélange (12) d'un mélangeur-distributeur (1) selon une ou plusieurs des revendications 1 à 13 précédentes, comprenant les étapes consistant :
a) à introduire au moins une partie du dispositif de chargement (3) dans une fosse pour aliments,
b) à détacher une quantité d'aliments de la fosse pour aliments au moyen du dispositif de chargement,
c) à déplacer la quantité d'aliments loin de la fosse pour aliments au moyen du dispositif de chargement, où la quantité d'aliments est transférée dans la cuve de mélange, à travers la paroi verticale de la cuve de mélange, par pivotement du dispositif de chargement autour du pivot horizontal vers la position de pivotement par rapport au moyen de guidage,
le procédé comprenant en outre les étapes successives consistant :
- à déterminer, en tant que partie de l'étape b), en utilisant un moyen de capteur, une dimension de la quantité d'aliments à détacher,
- à déterminer, en tant que partie de l'étape c), le poids de la quantité d'aliments chargée dans la cuve de mélange pendant l'étape c) précitée, en utilisant des moyens de pesage qui fonctionnent sur la cuve de mélange,
- à déterminer une relation entre la dimension et le poids des aliments provenant de la fosse pour aliments sur la base du poids et de la dimension tels que déterminés,
- à déterminer une dimension d'une quantité d'aliments à détacher pendant une étape b) suivante en fonction d'un poids total souhaité prédéterminé d'aliments à charger dans la cuve de mélange et de la relation telle que déterminée, et
- à détacher une quantité d'aliments ayant la dimension déterminée de la fosse pour aliments pendant l'étape b) suivante précitée.

15. Procédé selon la revendication 14, dans lequel, en tant que partie de l'étape b) suivante précitée qui consiste à détacher une quantité d'aliments ayant la dimension déterminée de la fosse pour aliments,
- le dispositif de chargement est introduit dans la fosse pour aliments dans le but de détacher la quantité d'aliments supplémentaire sous une quantité d'aliments préalablement retirée, à une position inférieure prédéterminée dans la fosse pour aliments, de sorte qu'une distance entre la partie du dispositif de chargement introduite dans la fosse pour aliments et une surface supérieure libre de la fosse pour aliments au niveau de l'emplacement de la quantité d'aliments à détacher corresponde à la dimension.
